Europäisches Patentamt

European Patent Office

Office européen des brevets

(19)

(11) Publication number: **0 092 620**
**A1**

(12) # EUROPEAN PATENT APPLICATION

(21) Application number: **82302183.7**

(22) Date of filing: **28.04.82**

(51) Int. Cl.³: **H 02 H 3/34**
**H 02 H 7/26, G 01 R 31/08**

(43) Date of publication of application:
**02.11.83 Bulletin 83/44**

(84) Designated Contracting States:
**CH DE FR GB IT LI NL SE**

(71) Applicant: **Hitachi, Ltd.**
**5-1, Marunouchi 1-chome**
**Chiyoda-ku Tokyo 100(JP)**

(72) Inventor: **Yoshizaki, Atsuhiro**
**1469 Tabiko**
**Katsuta-shi(JP)**

(74) Representative: **Ellis, Edward Lovell et al,**
**MEWBURN ELLIS & CO. 2/3 Cursitor Street**
**London EC4A 1BQ(GB)**

(54) **Protective relay.**

(57) Disclosed is a protective relay which carries out various relay functions by converting externally received AC data into time widths in accordance with protective ranges and determining whether or not the protective operations are necessary on the basis of the time widths. The protective relay receives a plurality of input AC data (A1, B1, C1, A2, B2, C2; A, B, C, ..., N, A', B', C', ..., N'; A, B, ..., N) through a time-dividing device (20, 202, 202') and converts the time-divided data into the time widths for the relay functions to determine the relay operations of the relay functions on basis of the time widths.

FIG. I

# PROTECTIVE RELAY

The present invention relates to an electric power protective relay and, more particularly, to a static protective relay suitable for monitoring power lines by carrying out various relay functions collectively.

It is the duty of the protective relay that in case of occurrence of a fault such as a short-circuit or a ground fault somewhere in the power system, the protective relay detects the abnormal state which may adverse effect on the system and issues a command to disconnect the faulty portion from the system immediately. This duty may be attained by a single protective relay or by the combination of various protective relays.

The protective relays are rougly classified from the viewpoint of mechanism thereof into electromagnetic ones and static ones, and the protective relay according to the present invention belongs to the latter ones. The static relay is typically constituted by an input transforming circuit, a vector composing circuit, a rectangular-wave converting circuit, a determining circuit, etc. The operation of the static relay takes palce in the form of generation or extinction of its electrical output. For the better understanding of the invention, the constituents of the static relay will first be described in brief.

(a) Input transforming circuit

This circuit is typically provided with auxiliary transformers such as a voltage transformer, a current transformer or the like, and serves to transform the levels of input A.C. voltage and current into those falling within ranges suitable for the determining circuit, to shift the phases of the input data, to optimise the transient characteristics and frequency characteristics of the input data, and to provide the isolation between the input circuit section and the determining circuit section.

(b) Vector composing circuit

Necessary vector values are composed of the input voltage and current data, in order to provide the characteristics of a range relay. The vector composing circuit is principally made up of adding and subtracting circuits for processing A.C. data (vector data).

(c) Rectangular-wave converting circuit

This circuit converts sinusoidal wavefroms into rectangular ones. Most relays which operate on the basis of the principle of phase detection carry out the sinusoidal-to-rectangular conversion.

(d) Determining circuit

This circuit is made up of various basic electronic circuits, and performs various arithmetic operations and determinations for identifying system failures and abnormalities.

One example of such a static protective relay is disclosed in Japanese Patent Publication No. 13236/ 1962. In order to provide a relay function with desired characteristics by determining the phase relationship between two AC voltages, the protective relay as disclosed comprises a gate circuit which achieves on/off operations in accordance with the phase relationship between the two voltages, an oscillator which provides a reference frequency for the gate circuit, and a counter which counts the oscillator output as it passes through the gate circuit, whereby the relay operates when the count in the counter exceeds a predetermined value.

Accordingly, a static relay is generally divided into an AC circuit section which handles AC waveforms (vector data) and a DC operating section which handles DC waveforms. In the case where various relays are combined to form a multi-function relay, there can be considered two system architectures, one being a so-called centralized system which has a common AC circuit section for the respective component relays and individual DC circuits provided separately for the respective component relays, and the other being a so-called unit system in which an AC circuit section and a DC circuit are provided for each relay. Both of these systems disadvantageously need many kinds of lead wires and a large space when building up a protective relay installation.

In order to solve such problems, there has been developed digital protective relays by utilizing microcomputers. In this system, the AC circuit section is unified and the sinusoidal waveform is converted into digital data cyclically at a high speed so that a single microcomputer processes the digital data to carry out numbers of protective relay functions. The principle of this system is that the AC input is digitalized and the data is processed for determining the operation of each relay in a high-speed time sharing fashion, and the operation is repeated at a high speed in order to carry out the determination of operation for numbers of protective relay functions. However, this system needs complicated and time-consuming processes due to the A/D conversion and also causes a high manufacturing cost.

The present invention contemplates to solve the foregoing prior art deficiencies. Accordingly, it is an object of this invention to provide a protective relay which does not need the A/D conversion, but operates on the basis of the principle of operational relay operation determination in analog mode and also utilizes the advantages of digital mode.

According to an aspect of the present invention, there is provided a protective relay wherein input AC information is transformed into necessary AC levels depending on the protective ranges and the rectangular waveforms obtained from half waveforms of the AC levels are logically processed to produce a time width, whereby determination of the protective operation is made in accordance with the time width, characterized in that in orer to carry out various relay functions, a plurality of AC input data are received in a time-division mode, the time-divided AC input data are converted into the pulse trains in accordance with the relay functions, and determination of the protective operation is made on the basis of the pulse trains.

Preferred embodiments of the present invention will now be described with reference to the accompanying drawings, in which:

Fig. 1 is a schematic diagram for explaining the principle of an embodiment of the present invention;

Fig. 2 is a set of waveform charts for explaining the sampling of input AC data in the embodiment shown in Fig. 1;

Fig. 3 is a set of waveform charts for explaining the operation of the embodiment shown in Fig. 1;

Fig. 4 is a timing chart for explaining the practical timings in operating the embodiment shown in Fig. 1;

Fig. 5 is a particular circuit diagram corresponding to the embodiment shown in Fig. 1;

Fig. 6 is a circuit diagram showing in part another embodiment derived from the embodiment shown in Fig. 5; and

Figs. 7A and 7B are diagrams showing the relationship between vector generation and operational determination.

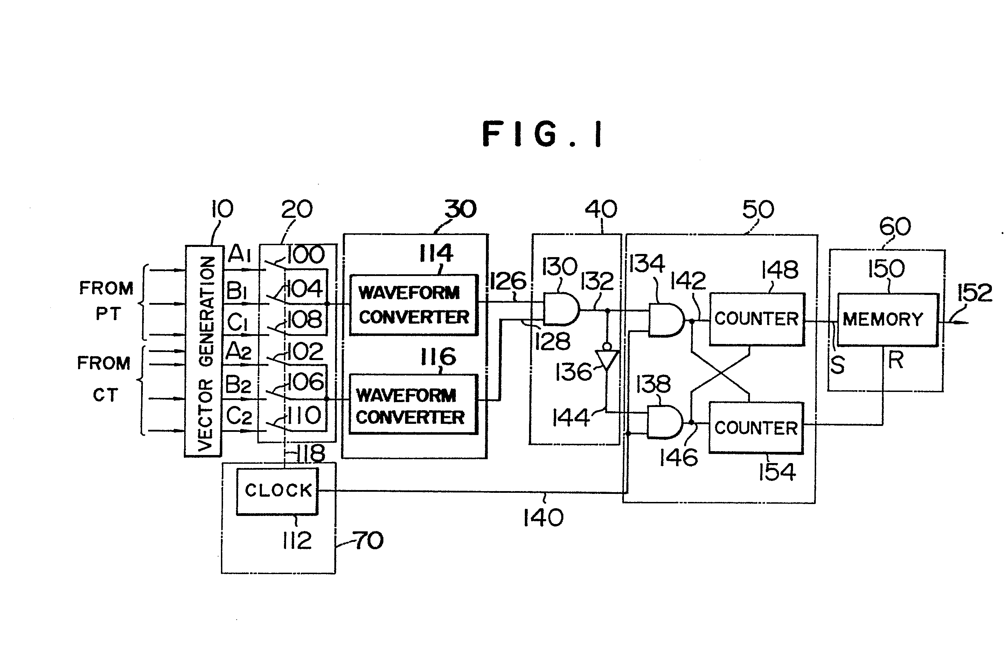

Fig. 1 shows an embodiment of the presnet invention schematically and in principle. For the purpose of simplicity, this embodiment is assumed to process the determination of operation for three relay functions, A, B and C, in the time-divided multiplex mode. The protective relay shown in Fig. 1 is constituted by a vector generating section 10, a switching section 20, a level discriminating section 30, a logic section 40, an operation determining section 50, an output section 60, and a control section 70. Although three sets of the operation determining sections 50 and output sections 60 are required corresponding to the three relay functions A, B and C, only one set of these sections for relay function A are illustrated in Fig. 1 for the sake of simplicity of the figure.

The vector generating section 10 receives voltage information, e.g. 3-phase voltages Va, Vb and Vc, from voltage transformers (PT) provided on the power line to be protected, and current information, e.g. 3-phase currents Ia, Ib, Ic and zero-phase current Io, from current transformers (CT) provided on the same power line. The vector generating section 10 provides vectors, e.g. vectors (A1, A2), (B1, B2) and (C1, C2) in this embodiment necessary for the operation of the relay functions A, B and C, based on the input information. Vector generation itself is known well in the art, and detailed description thereof will be omitted.

The switching section 20 includes three pairs of switches (100, 102), (104, 106) and (108, 110), and time-divides the vectors received from the vector generating section 10.

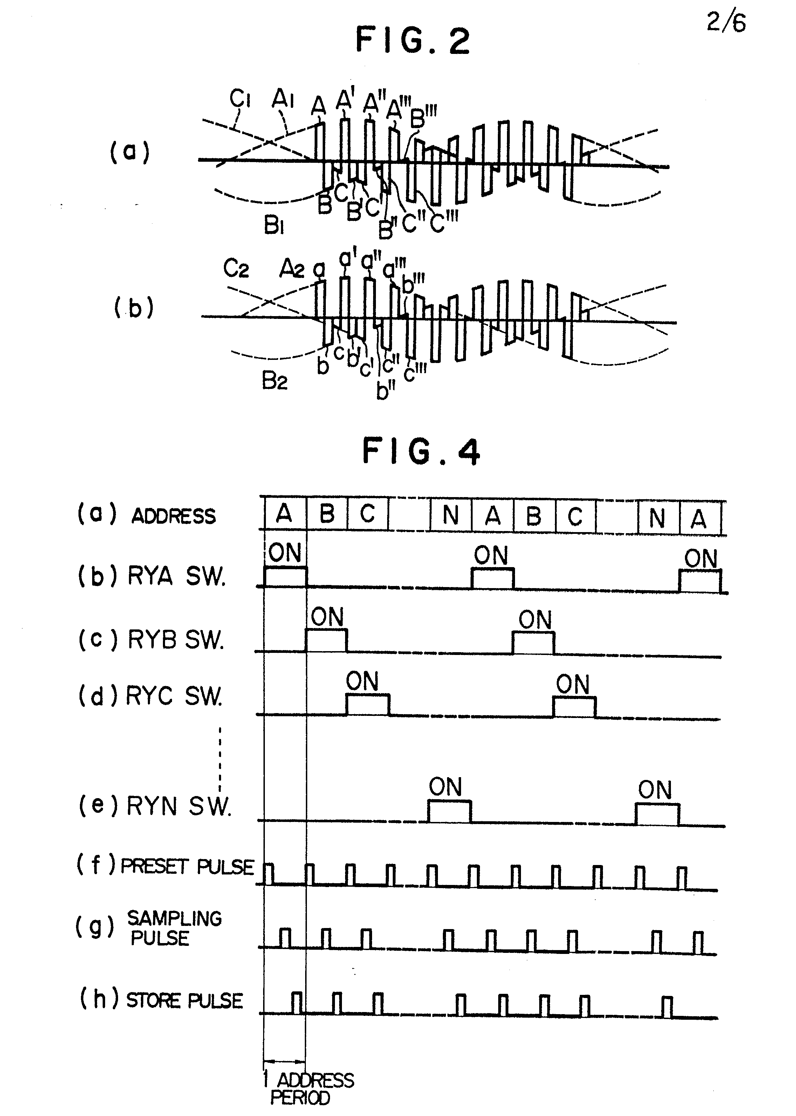

In the time-dividing operation, the input switch pair 100 and 102 for vectors A1 and A2 are simultaneously turned on during one clock period provided by a clock generator 112 in the control section 70. During the next one clock period, the input switch pair 104 and 106 for vectors B1 and B2 are simultaneously turned on, and then the input switch pair 108 and 110 for vectors C1 and C2 are turned on during the subsequent one clock period. This operation takes place cyclically in response to the clocks. The output signals from the switching section 20 have the waveforms as shown in Fig. 2. The switching section 20 produces chopped signals A and $\underline{a}$ from the vectors A1 and A2, respectively, during the first one clock period; produces B and $\underline{b}$ from B1 and B2, respectively, during the second one clock period; produces C and $\underline{c}$ from C1 and C2, respectively, during the third one clock period; produces A' and a' from A1 and A2 during the fourth one clock period; produces B' and b' from B1 and B2 during the fifth one clock period; produces C' and c' from C1 and C2 during the sixth one clock period, and so on. In the same way, information pairs, such as (A", a"), (B", b"), (C", c"), (A''', a'''), (B''', b'''), (C''', c'''), and so on, are supplied to a pair of rectangular-wave converters 114 and 116 which constitute the level discriminating section 30. For example, the level discriminating section 30 processes the input signals for the relay function A for one count while the switching section is sampling the vectors A1 and A2.

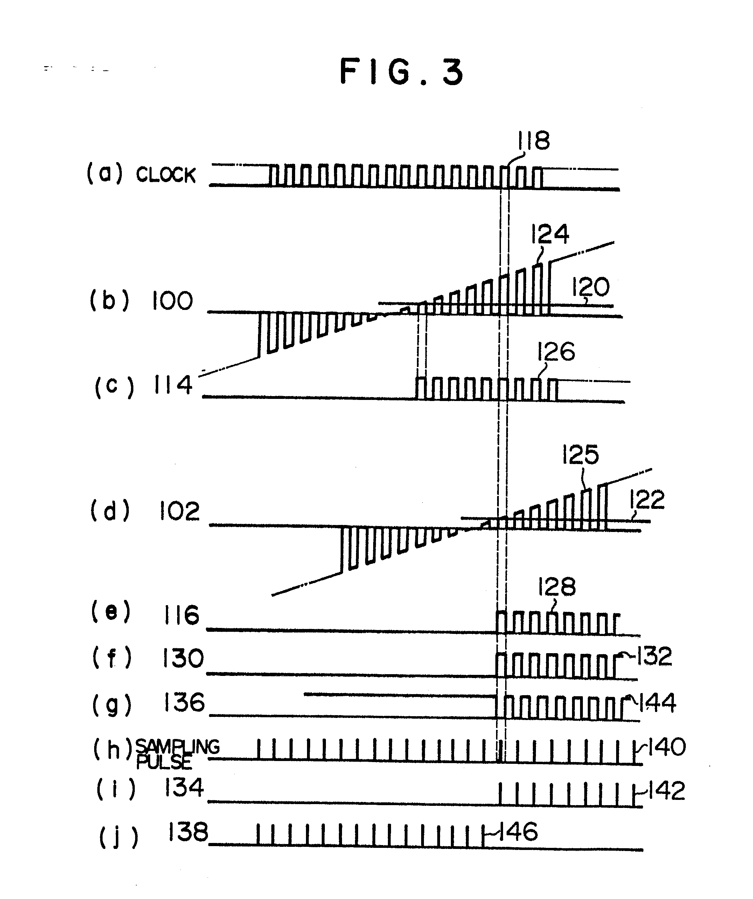

The processing for the relay function A will be described illustratively in connection with Fig. 3.

In Fig. 3, (a) shows a train of clock pulses 118 generated by the clock generator 112. For the sake of simplicity of the drawing, the train of clock pulses is illustrated with a frequency with which only one switch pair, e.g. the switch pair 100 and 102, are driven, whereas in actual the train of clock pulses are required to have a frequency three times as many as that shown in (a) of Fig. 3 so that the switch pairs (100, 102), (104, 106) and (108, 110) are sequencially and periodically actuated as described previously. Thus, the switch pair 100 and 102 are closed to introduce vector information when a clock pulse exists (at a logical high level), and opened when no clock pulse is present (at a logical low level). Consequently, the input AC waveforms A1 and A2 are transformed into pulses representing the respective instantaneous values thereof as shown in (b) and (d) of Fig. 3, and these pulse data 124 and 125 are supplied to the pair of rectangular wave converters 114 and 116 in the level discriminating section 30. The pulse data shown in (b) and (d)in Fig. 3 correspond to the time-divided data A, A', A", A''', ------; and a, a', a", a''', -----, respectively, in Fig. 2.

The rectangular converters 114 and 116 respond to the input pulses whose amplitudes exceed respective preset slice levels 120 and 122, to provide rectangular pulses 126 and 128 each having a given amplitude as shown in (c) and (d) of Fig. 3, respectively. These pulses 126 and 128 are supplied to the respective inputs of an AND gate 130 in the logic section 40 as shown in Fig. 1. Since the input pulses 126 and 128 are in-phase with each other, the AND gate 130 produces a pulse train 132 ((f) of Fig. 3) which is in-phase with the pulses 126 and 128, and therefore in-phase with the clock pulses 118. Each of the slice levels of the rectangular converters 114 and 116 may be determined depending on the relay functions, and it may be set to a certain level slighlty larger than zero when the relay function needs to compare the phases of two input AC data. Although the slice levels 120 and 122 may be set to zero in theory for comparing the phases of two input AC data, they are to be set to have a small value beyond zero because, otherwise, it would be difficult to distinguish whether input information exists with an instantaneous zero value, or input information does not exist at all, resulting in possible maloperations. It will be understood that by setting the slice levels 120 and 122 to have a small value beyond zero, the AND gate 130 produces output pulses 132 during the period when both the input AC waveforms A1 and A2 have positive values.

The train of output pulses 132 from the AND gate 130 are fed to one input of an AND gate 134 in the operation determining section 50 ((f) of Fig. 3) and, at the same time, fed through an inverter 136 in the logic section 40 to one input of an AND gate 138 in the operation determining section 50 ((g) of Fig. 3). The other input of each of the AND gates 134 and 138 is supplied with sampling pulses 140 ((h) of Fig. 3) produced from the clock generator 112 substantially in synchronism with the respective central positions of the clock pulses 118 supplied to the switches 100 and 102. The generation of the sampling pulses 140 is started when the generation of the clock pulses 118 is started. The output pulses 132 from the AND gate 30 and the sampling pulses 140 are ANDed by the AND gate 134, so that the sampling pulses 140 are enabled to pass through the AND gate 134 as the output pulses 142 ((i) of Fig. 3) while the pulse train 132 exists. The inverter 136 produces output pulses 144 which are the negative version of the pulse train 132, as shown in (g) of Fig. 3. The AND gate 138 achieves logical AND between the output 144 of the inverter 136 and the sampling pulse train 140 so as to produce a train of pulses 146 as shown in (j) of Fig. 3. The output pulses 142 from the AND gate 134 are fed to a counter 148 in the operation determining section 50, and the number of pulses is counted in the counter 148. It will be understood that the count of the counter 148 represents the phase difference between the input AC waveforms A1 and A2. When the contents of the counter 148 reaches a predetermined value, it is recognized that a fault or an abnormal state has occurred and a memory 150 in the output section 60 is supplied with a set signal S from the counter 148 so as to produce an operation signal 152 for the relay function A.

The output pulse train 146 from the AND gate 138 is fed to a second counter 154 which counts the number of pulses of the pulse train 146 and which issues a reset signal R to the memory 150 when the count reaches a predetermined value. The counters 148 and 154 are cleared by the pulse trains 146 and 142, respectively.

It has been described illustratively in connection with Figs. 1 and 2 how the multi-function protective relay receives a pair of AC input signals A1 and A2 in time-division and carries out the relay function A. Similarly, the relay function B is carried out by turning-on the switch pair 104 and 106 in response to the 2nd, 5th, 8th, ..., and $(3n-1)$th clock pulses in the clock pulse train 118 from the clock generator 112, and the relay function C is carried out by turning-on the switch pair 108 and 110 in response to the 3rd, 6th, 9th, ..., and $3n$-th clock pulses in the clock pulse train 118 ($n$ being natural number). The determining operations for the relay functions B and C are identical to that for the relay function A as described above.

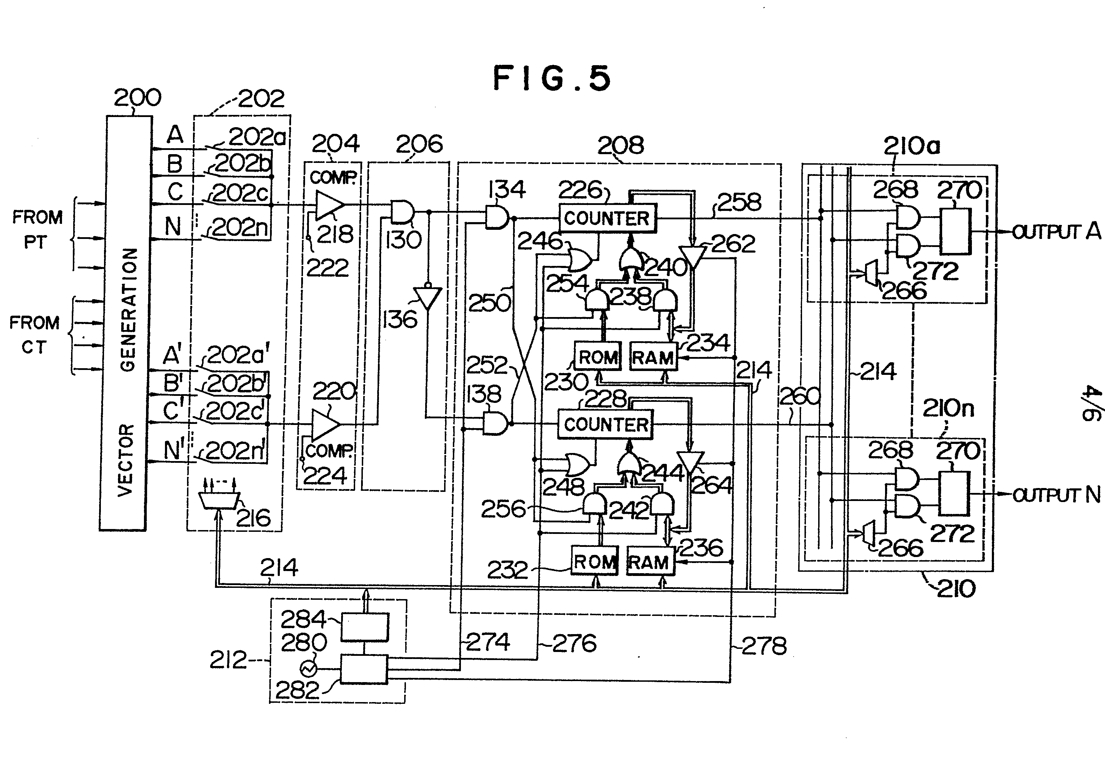

The principle of the present invention has been described illustratively. In actual, however, the operation determining section 50 and the output section 60 are required to be provided individually for each of the relay functions, and these sections have to be operated sequentially in synchronism with the time-divided switching operation for the input AC signals. However, provision of the operation determining section 50 and the output section 60 for each relay function makes the overall system expensive and also necessitates a large installation space. It is therefore desirable to provide only a pair of counters for multiplex use. In order to attain this idea, special devices as described hereunder are required. The principle of the method will be described with reference to Fig. 4, where an assumption is made that the protective relay performs $n$ relay functions, A, B, C, ..., N, on a time-divided multiplex basis. As described earlier in connection with Fig. 3 for the embodiment of Fig. 1, only 1/3 of the actual clock pulses have been shown for simplicity so that the input AC waveforms are sampled by each clock pulse. However, in actual the clock pulse has a frequency three times as high as that frequency, with the first clock pulse operating on the switch pair 100 and 102 for relay function A, the second clock pulse operating on the switch pair 104 and 106 for relay function B, the third clock pulse operating on the switch pair 108 and 110 for relay function C, the fourth clock pulse operating on the switch pair 100 and 102 again, and so on. In this case, therefore, three clock periods are regarded as a period of one count for each of the three relay functions. Thus, for carrying out $n$ relay functions, $n$ clock periods constitute a period of one count for each of the $n$ relay functions. As shown in (a) of Fig. 4, addresses each having an addressing period which equals to the period of one count are issued for each relay function. The addresses A, B, C, ..., and N correspond to the respective relay functions A, B, C, ..., and N, and they are generated cyclically, such as A, B, C, ..., N, A, B, C, ..., N, and so on.

The following operations take place in one addressing period:

(1)     A switch pair corresponding to an address are turned on so as to fetch input AC data for determining the relay operation corresponding to that address;

(2)     The count for the previous addressing period for the same address, which has been stored in a memory, is read out and preset to the counters similar to those (148 and 154) shown in Fig. 1;

(3)     A sampling pulse as shown by 144 in (h) of Fig. 3 is generated, and the preset value is incremented by one; and

(4)     The count stored in the memory is updated by the contents of the counters.

These four steps of operation are shown in (a) to (h) of Fig. 4. For example, during the addressing period A for the relay function A (RYA), the switch pair for the RYA is turned on and the following pulses are then generated sequentially.

Preset pulse ((f) of Fig. 8) ... Operation of step 2 Sampling pulse ((g) of Fig. 8) ... Operation of step 3 Storing pulse ((h) of Fig. 8) .... Operation of step 4

This operation is repeated for each address for the operation determination for each relay function. Thus, the same counter pair are used on the multiplex basis by making access to the memory for each address cyclically.

The address switching frequency relates significantly to the accuracy of determining the relay operation. The higher the address switching frequency, the higher resolution of determination will result. Since determination for one relay operation is made every $n$ address periods, if determination for each relay operation needs an accuracy of 1° in electrical angle, the address switching frequency F must satisfy:

$$F \geq f \times 360° \times n$$

where $f$ is the fundamental frequency of the input AC data.

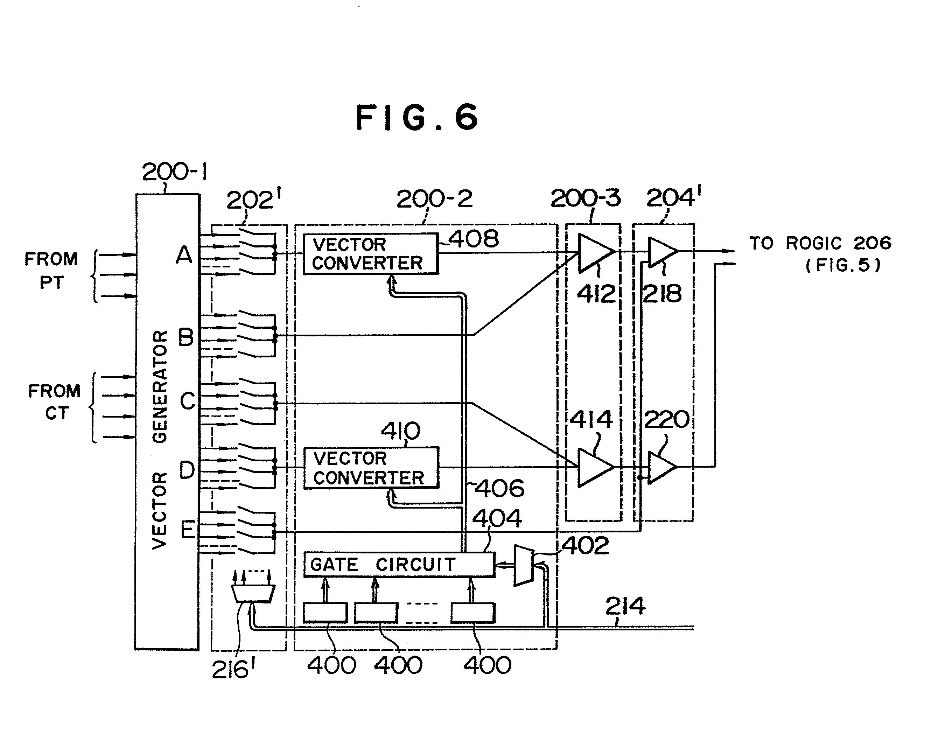

Fig. 5 shows a preferred embodiment of the time-division multiplex protective relay according to the present invention. The protective relay incudes a vector generating section 200, a switching section 202, a level discriminating section 204, a logic section 206, an operation determining section 208, an output section 210, and a control section 212, as in the case of the arrangement shown in Fig. 1.

The vector generating section 200 receives the three-phase voltages Va, Vb and Vc from voltage transformers (PT) and the three-phase currents Ia, Ib, Ic and the zero-phase current Io from current transformers (CT), and generates vectors, for example, (A, A'), (B, B'), (C, C'), ..., (N, N') necessary for the respective relay functions A to N. The vector generation is known well in the art, and the explanation thereof will be omitted.

A decoder 216 provided in the switching section 202 decodes the address which is sent from the control section 212 through an address bus 214. Then one of the switch pairs 202a and 202a'; 202b and 202b'; 202c and 202c'; ...; 202n and 202n' are selectively addressed in accordance with the decoded address so as to be turned on.

The level discriminating section 204 includes a pair of comparators 218 and 220 having respective slice levels 222 and 224 which are compared with instantaneous values of vectors entered through the selected switch pair, similarly to the rectangular-wave converters 114 and 116 as shown in Fig. 1. Each of the comparators 218 and 220 produces a low level pulse signal when the input vector level is smaller than the input slice level, and produces a high level pulse signal when the input vector level exceeds the input slice level.

The logic section 206 includes an AND gate 130 which achieves logical AND between the outputs of the comparators 218 and 220, and an inverter 136 which negates the output of the AND gate 130, as in the case of Fig. 1. The operation of the AND gate 130 and inverter 136 is exactly the same as in the case of Fig. 1.

The operation determining section 208 includes a pair of AND gates 134 and 138, a pair of parallel-in/parallel-out counters 226 and 228, a pair of fixed or read-only memories (ROMs) 230 and 232 which store the initial values for these counters, and a pair of erasable or random access memories (RAMs) 234 and 236 which may store the counts of the counters. The operation determining section 208 operates as follows in one addressing period shown in Fig. 4 in response to the preset pulse ((f) of Fig. 4), the sampling pulse ((g) of Fig. 4) and the storing pulse ((h) of Fig. 4).

(1)    When the preset pulse is generated, the RAM 234 (RAM 236) is in the read mode due to the absence of the storing pulse, and the count which has been stored in the same address of the RAM during the previous operation is read out through the AND gate 238 and the OR gate 240 (the AND gate 242 and the OR gate 244) and preset to the counter 226 (counter 228). This preset operation is timed by applying the outputs of the OR gates 246 and 248 to the counters 226 and 228, respectively, as a load signal therefore when the preset pulse is generated.

(2)    When the sampling pulse is then generated, the AND gate 134 (AND gate 138) produces a signal similar to 142 (146) in Fig. 3 to increment the contents of the counter 226 (counter 228) by one. In this case, only one of the AND gates 134 and 138 can produce the output signal during one address period as seen in (i) and (j) of Fig. 3. One of the counters 226 and 228 (e.g. 226) corresponding to the AND gate (e.g. 134) without producing its output (e.g. 250) is set again to the initial value predetermined for each address and stored in the corresponding one of the ROMs 230 and 232 (e.g. 230) through the corresponding AND and OR gates (e.g. AND gate 254 and OR gate 240) in response to the existing one of the output signals 250 and 252 (e.g. 252). This operation is timed by the existing one of the output signals 250 and 252 (e.g. 252) which is fed as a load signal to the one counter (e.g. 226) via corresponding one of the OR gates 246 and 248 (e.g. 246). At the same time, when the other counter (e.g. 228) reaches the maximum count or full-bits state as a result of the above-mentioned incrementing operation (the counters 226 and 228 have the same capacity), it produces a carry signal (e.g. 260) for the output section 210.

(3)      Subsequently, when the storing pulse is generated, the RAMs 234 and 236 are brought into the write mode and three-state buffers 262 and 264 are actuated to cause the RAMs 234 and 236 to store the contents of the counters 226 and 228 into the respective addresses specified through the bus 214.

In the output section 210, a decoder 266 decodes the address on the bus 214 to select one of output circuits 210a - 210n for respective relay functions A to N. In the thus selected output circuit (e.g. 210a) when the signal on the line 258 goes high, the output of the decoder 266 is allowed to pass through an AND gate 268 to set a memory element 270 to render the output of the relay function (e.g. output A) selected by the decoder 266 high. On the contrary, when the signal on the line 260 goes high, the output of the decoder 266 is allowed to pass through an AND gate 272 to reset the memory 270 to render the output (e.g. output A) low. This operation is timed by the counter output 258 or 260 caused by the sampling pulse 274.

In order to carry out the foregoing operations, the control section 212 includes an oscillator 280 for generating the present pulse 276, the sampling pulse 274 and the storing pulse 278, a clock pulse generator 282, and an address counter 284 which generates the address in synchronisum with the clock pulse. The bus 214 is drived by the oscillator 280.

By the arrangement as described above, the basic operation of the present invention shown in Fig. 1 can be carried out on the time-divided multiplex basis.

The foregoing embodiment has been described as a direct phase-comparison circuit. The arrangement of Fig. 5 can also function to estimate the magnitude of a single input value. For example, for a certain address, one of the two inputs to the level discriminator, e.g. the input to the comparator 218, is supplied with an AC data while another input, i.e. the input to the comparator 220, is supplied with a DC level higher than its slice level, so that the result of logical ANDing operation for the outputs of the comparators 218 and 220 indicates the duration in which the input AC data exceeds the set level.  This duration is measured by the operation determining section 208, and the output section 210 produces an output when the duration is longer than a predetermined value.

In the arrangement of Fig. 5, the counters 226 and 228 serve as adders, and they may be replaced with other arithmetic circuits with ability of addition.  In the case where the output of the arrangement of Fig. 5 is connected to an interface of an external computer, the output section 210 may be omitted, and the counter output lines 258 and 260 and the address bus 214 may be connected directly to the computer interface.  In addition, the operations of the logic section 206, operation determining section 208, output section 210, and control section 212 can be carried out by logically computing through the software in a microcomputer.

Fig. 6 shows in part the modified version of the embodiment shown in Fig. 5.

As described previously, in the arrangement of Fig. 5 the vector generating section 200 is followed by the switching section 202 which is in turn connected to the level diseriminating section 204.  The sections following the switching section 202 are used commonly for determining various relay functions.  Obviously, the more the range of the commonly used portions, the higher the efficiency of the installation can be expected. The embodiment of Fig. 6 is based on such consideration, and is arranged in such a way that the vector generating section 200 is disintegrated on the basis of the functions of the conventional relay and the switching section is provided in the more forward stage. Functions of the vector generating section 200 can be divided on the basis of the functions of the conventional relay into the following four sections:

(1)     Input auxiliary transformer section (auxiliary PT and CT);

(2)     Phase shifting section for generating necessary AC vectors;

(3)     Setting section for converting the magnitude of AC data into a predetermined value to determine the operating range of the relay; and

(4)     Vector calculating section for processing the outputs of the above sections mentioned in (1) - (3) to generate AC vectors necessary for making the final determination of the operation.

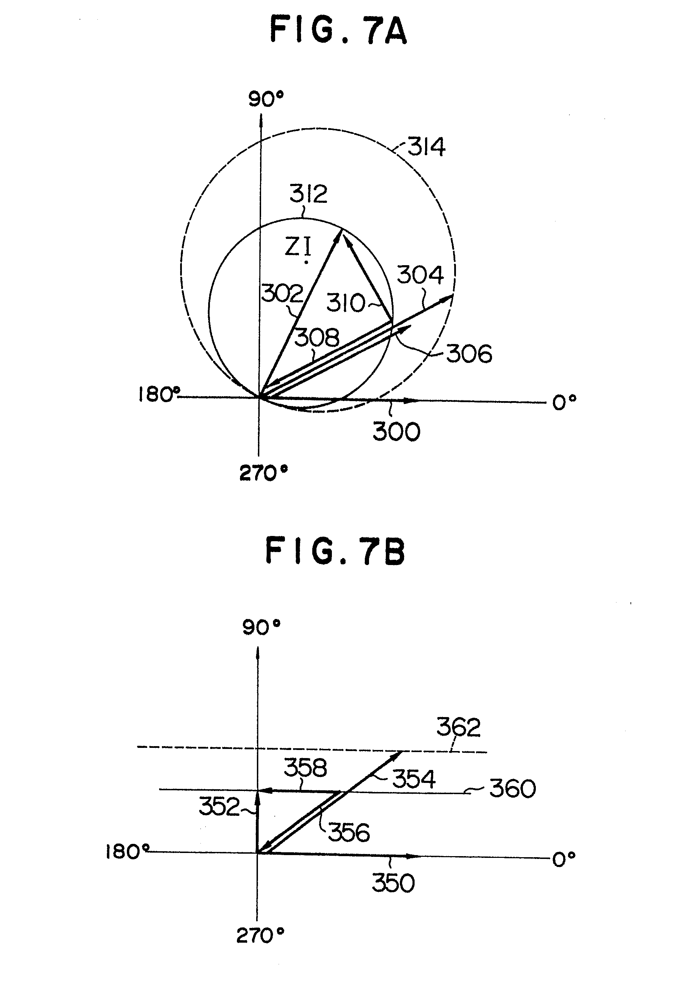

The precesses by the above four sections are known well in the art, and two examples are shown in Figs. 7A and 7B. Fig. 7A shows the mho characteristics and Fig. 7B shows the reactance characteristics of a range relay. In Fig. 7A, a current input 300 to the relay is regarded as a basis of conversion and converted into a ZI vector 302 having a predetermined magnitude and phase angle. A voltage input 304 to the relay is also connected into an in-phase vector 306 and a vector 308 having the opposite phase. The magnitude of the vector 308 is proportional to the magnitude of the vector 304 in accordance with the setting which determines the operation of the relay. In addition, a range vector 310 is produced by adding the vector 302 to the vector 308. With the operating range seen inside the relay assumed to be a circle 312, the operating range seen from the input of the relay becomes a circle 314, resulting in a criterion of determination to be: "The phase difference between vectors 310 and 306 should be 90° or less".

The vectors are generated in the following procedures:

(i)     The AC inputs 300 and 304 are fetched in accordance with the foregoing items (1) and (2) to generate the vectors 302 and 306;

(ii)    Vector 308 is produced from the vector 304 in accordance with the item (3); and

(iii)   Vector 310 is produced by adding the vctors 302 and 308 in accordance with the item (4).

Similarly, in Fig. 7B, a vector 352 is generated on the basis of a current input 350, a vector 356 is produced on the basis of a voltage input 354, and a range vector 358 is produced by adding the vectors 352 and 356. The criterion for determining the operation is the phase difference of 90° or less betwen the vectors 358 and 352 as in the case of the above-mentioned mho characteristics. The operating range seen from the internal vector is shown by 360, and the operating range seen from the relay input is shown by 362. These vectors are generated in accordance with the foregoing items (1)-(4), similarly to the case of mho characteristics, and general relays such as the range relay are covered by this method.

In Fig. 6, the vector generating section 200 shown in Fig. 5 is divided into an auxiliary transformer section (not shown), a vector generating section 200-1, a setting section 200-2 and a vector calculating section 200-3. The output vectors from 200-1 are selected in the switching section 202' by decoding the address on the address bus 214 by means of the decoder 216', then the selected vectors are supplied to the section 200-2. The principle of operation and the timing of operation are generally identical to the case of Fig. 5.

The section 200-1 receives the AC input from the auxiliary transformers (not shown) and produces vector groups A, B, C, D, and so on. In the example of Fig. 7A, these vector groups are as follows.

A: Vector 308, B: Vector 302 and C: Vector 306

Vector group D is not used in this example. However, for obtaining the offset mho characteristics, the vector group D will be a voltage vector group for setting offset values.

In the switching section 202', the decoder 216' decodes the address on the bus 214, and the addressed switch pair are turned on. The principle of this operation is identical to that of the section 202 in Fig. 5.

In the setting section 200-2, the decoder 402 decodes the address on the bus 214, and one of setting circuits 400 made up of digital switching means or the like for the respective relay functions is selected by the gate circuit 404 based on the decoded address, so that the addressed setup value in the selected setting circuit 400 is sent over the bus 406. The setup value on the bus 406 drives the setup value converters 408 and 410 so that the AC vector is converted to have a specified magnitude. Although converters 408 and 410 function in a similar manner to the conventional setting taps, the vectors need to be switched at a high speed according to the given address. Therefore, the converters 408 and 410 are preferably made of semiconductor devices, and they can be designed easily using voltage dividers by resistors and semiconductor analog switches which select the outputs of the voltage dividers.

The vector calculating section 200-3 includes vector adders 412 and 414, each made up of an operational amplifier and associated components. The outputs of the vector calculating section 200-3 are applied to the level discriminating section 204' which is similar to the section 204 shown in Fig. 5. The sections following the level discriminating sectin 204' are exactly identical to those of the embodiment shown in Fig. 5 and illustration and description for these sections will be omitted.

The switching section 202' may be additionally provided with a switch group E so that the slice levels for the comparators 218, 220 in the level discriminating section 204' can be selected by the address, whereby such a relay function as to determine the magnitude of a single AC data, namely to judge the excessive current and deficient voltage, can be incorporated. For example, the judgement of the excessive current can be carried out in such a way that the duration of the current excessive of the slice level is measured in each half cycle of the input AC data by the count system according to the present invention and the determination of operation is made when the count reaches a predetermined value.

The arrangement of Fig. 6 includes more circuits following the switching section as compared with the arrangement of Fig. 5. This allows more sections to be used commonly in determining the operations of the relay functions, and the more effective relay system can be made.

**CLAIMS.**

1.        A protective relay wherein input AC information is transformed into necessary AC levels depending on the protective ranges and the rectangular waveforms obtained from half waveforms of the AC levels are logically processed to produce a time width, whereby the execution of the protective operation is determined on the basis of said time width, characterized in that, in order to carry out various relay functions, a plurality of input AC data (A1, B1, C1; A2, B2, C2; A, B, C, ..., N; A', B', C', ..., N'; A, B, ..., E) are received through time-dividing means (20, 202, 202') and that the data fetched in time-division are converted into a pulse train in accordance with each of said plurality of relay functions, so that the operation of each of said plurality of relay functions is determined on the basis of said pulse train.

2.        A protective relay according to claim 1, comprising a vector generating section (10, 200) which converts externally received AC data into a plurality of vectors necessary to determine the relay operations of said plurality of relay functions; a switching section (20, 202, 202')which samples the plurality vectors for each of said relay functions (A, B, C; A, B, C, ..., N) sequentially in a specified order of said relay functions; a level discriminating section (30, 204) which compares the plurality of sampled-out values produced by said switching section with respective slice levels given to each relay function and produces pulses having a given amplitude every time each of said sampled-out values exceeds the slice level; a logic section (40, 206) which performs logical processing for two outputs from said level discriminating section to thereby produce a first output and performs logical negation for said first output to produce a second output; an operation determining section (208) which calculates said time width necessary for edetemining the relay operations of said relay functions sequentially in said specified order in response to said first output from said logic section so as to produce a first signal when the execution of the relay operation is determined to be necessary as a result of the determining calculation, and calculates the second time width for invalidating the relay operations of said relay functions sequentially in said specified order in response to said second output from said logic section so as to produce a second signal when the execution of the relay operation is determined to be unnecessary as a result of the determining calculation; an output section (210) including a plurality of output circuits (210a - 210n) respectively corresponding to said relay functions, each of said output circuits being set upon receipt of a related signal in said first signal produced sequentially by said operation determining section so as to produce an output signal indicating the relay operation of the related relay function to be necessary, and being reset upon receipt of a related signal in said second signal; and a control section (70, 212) connected to said switching section, and for timing said sampling operation, said relay operation determining calculation and the selecting operation of said output section.

3.        A protective relay according to claim 1, comprising a vector generating section (200-1) which converts externally received AC data into a plurality of vectors (A-E) necessary to determine the relay operations of said plurality of relay functions; a switching section (202') which samples said vectors sequentially in a specified order of said relay functions; vector setting/calculating section (200-2, 200-3) which performs calculation for said sampled vectors produced sequentially by said switching section and so as to produce a pair of vectors necessary for determining each of the relay operations of said relay functions; a level discriminating section (204') which ocmpares said pair of vectors with given slice levels respectively and produces pulses when said vectors are larger than said slice levels respectively; a logic section (40, 206) which performs logical processing for two outputs from said level discriminating section to produce a first output and performs logical negation for said first output to produce a second output; an operation determining section (208) which calculates said time widths necessary for determining the relay operations of said relay functions sequentially in said specified order in response to said first output from said logic section and produces a first signal when the execution of relay operation is determined to be necessary as a result of a determining process, and calculates a second time width for invalidating the relay operation of said relay functions sequentially in said specified order in response to said second output from said logic section and produces a second signal when the execution of relay operation is determined to be unnecessary as a result of a determining process; an output section (210) including a plurality of output circuits (210a - 210n) respectively corresponding to said relay functions, each of said output circuits being set upon receipt of a related signal in said first signal produced sequentially by said operation determining section so as to produce an output signa indicating the relay operation of the related relay function to be necessary, and being reset upon receipt of a related signal in said second signal; and a control section (70, 212)connected to said switching section, said operation determining section and said output section, and for timing said sampling operation, said relay operation determining process and the selecting operation of said output circuits.

4.      A protective relay according to claim 2 or 3, wherein said control section (212) generates in a same frequency a preset pulse train (276), a sampling pulse train (274), a storing pulse train (278) and addresses which indicate said specified order of said relay functions, said preset pulse train, sampling pulse train and storing pulse train including pulses each being generated in one period of said addresses sequentially in the order of a preset pulse, a sampling pulse and a storing pulse, said switching section (202, 202') and said output section (210) being controlled by said addresses; said operation determining section (208) includes a first and a second determining circuit, said first and second determining circuits including a first and second counter (226, 228), a first and a second read only memory (230, 232) and a first and a second erasable memory (234, 236), respectively, said first and second determining circuits being controlled by said addresses, preset pulse train, sampling pulse train and storing pulse train in a manner so that in one address period the count values which have been stored in said first and second erasable memories during the previous period of the same address are read out to be preset to said first and second counters, respectively, in response to a preset pulse generated in said one address period, the count value in said first counter (226) is incremented by one when said first output is produced and the count value in said second counter (228) is incremented by one when said second output is produced, in response to a sampling pulse generated subsequently to said preset pulse, the contents of said first and second counters (224, 226) are stored in said first and second erasable memories (234, 236), respectively, in response to a storing pulse generated subsequently to said sampling pulse, a predetermined first and second count values necessary for
determining the relay operations of said relay functions
and stored in said first and second read only memories,
respectively, are supplied to said first and second
counters, respectively, during said one address period,
said operation determining section produces said first
signal when the count value of said first counter reaches
said first count value and produces said second signal
when the count value of said second counter reaches
said second count value, and said first and second counters
are cleared by said first and second outputs, respectively,
in every period of said externally received AC data.

# FIG. 1

FROM PT

FROM CT

10 VECTOR GENERATION

20

100 A₁
104 B₁
108 C₁
102 A₂
106 B₂
110 C₂

118

112 CLOCK

70

30

114 WAVEFORM CONVERTER

116 WAVEFORM CONVERTER

126

40

130
128
136
144
138
146

132

134 142

50

148 COUNTER

154 COUNTER

60

150 MEMORY

152

S    R

140

1/6

0092620

# FIG. 2

(a)

(b)

# FIG. 4

(a) ADDRESS | A | B | C | N | A | B | C | N | A

(b) RYA SW.  ON ... ON ... ON

(c) RYB SW.  ON ... ON

(d) RYC SW.  ON ... ON

(e) RYN SW.  ON ... ON

(f) PRESET PULSE

(g) SAMPLING PULSE

(h) STORE PULSE

1 ADDRESS PERIOD

# FIG. 3

(a) CLOCK — 118

(b) 100 — 124, 120

(c) 114 — 126

(d) 102 — 125, 122

(e) 116 — 128

(f) 130 — 132

(g) 136 — 144

(h) SAMPLING PULSE — 140

(i) 134 — 142

(j) 138 — 146

FIG.5

# FIG. 6

FROM PT

FROM CT

200-1 VECTOR GENERATOR

202'

A

B

C

D

E

216'

200-2

VECTOR CONVERTER 408

410 VECTOR CONVERTER

406
404

GATE CIRCUIT

400  400  400

402

200-3  204'

412  218

414  220

402

214

TO ROGIC 206 (FIG.5)

5/6

0092620

# FIG. 7A

# FIG. 7B

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB - A - 2 008 345 (MULTILIN) <br> * abstract, page 1, lines 76 to 102; fig. 1 * <br> -- | 1,2 | H 02 H 3/34 <br> H 02 H 7/26 <br> G 01 R 31/08 |
| Y | PROCEEDINGS OF THE IEE, Vol. 126, No. 11, 1979 <br> M.T. SANT et al. "Online digital fault locator for overhead transmission line" <br> page 1181 to 1185 <br> * page 1183, § 4 "Multiplexing of single-phase fault locator" fig. 6 * <br> -- | 1,2 | |
| Y | GB - A - 1 096 412 (ENGLISH ELECTRIC CO.) <br> * page 3, lines 9 to 28; fig. 1 * <br> -- | 2 | TECHNICAL FIELDS SEARCHED (Int. Cl. 3) <br><br> G 01 R 31/08 <br> H 02 H 3/34 |
| A | EP - A1 - 0 021 288 (TOKYO SHIBAURA DENKI KABUSHIKI KAISHA) <br> * claims 1,2; fig. 2 * <br> ---- | | H 02 H 7/26 |

The present search report has been drawn up for all claims

| Place of search | Date of completion of the search | Examiner |
|---|---|---|
| Berlin | 15-12-1982 | LEMMERICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82